# EUROPÄISCHE PATENTSCHRIFT

(11) **EP 1 599 690 B1**
(45) Veröffentlichungstag und Bekanntmachung des Hinweises auf die Patenterteilung: **20.09.2006**
(21) Anmeldenummer: 04714377.1
(22) Anmeldetag: 25.02.2004
(51) Int. Cl.: F16L 17/04

(54) **ROHRKUPPLUNG MIT GUMMIELASTISCHER DICHTMANSCHETTE**
PIPE COUPLING WITH ELASTIC RUBBER SEALING SLEEVE
RACCORD DE TUYAUX AVEC MANCHON D'ETANCHEITE EN CAOUTCHOUC ELASTIQUE

(30) Priorität: 27.02.2003 CH 306032003
(43) Veröffentlichungstag der Anmeldung: 30.11.2005
(73) Patentinhaber: Straub Werke AG, 7323 Wangs (CH)
(72) Erfinder: RIEDER, Reto, CH-7323 Wangs (CH)
(74) Vertreter: Rosenich, Paul
(86) Internationale Anmeldenummer: PCT/IB2004/000470
(87) Internationale Veröffentlichungsnummer: WO 2004/076905

(56) Entgegenhaltungen:
- EP-A- 0 066 825
- US-A- 400 600
- US-A- 3 453 006

## Beschreibung

Die Erfindung betrifft eine Rohrkupplung mit im wesentlichen zylindrischem, vorzugsweise aus metallischem Werkstoff bestehendem Gehäuse und einer zentrisch im Gehäuse angeordneten, im wesentlichen hülsenförmigen Dichtmanschette aus gummielastischem Werkstoff.

Solche Rohrkupplungen dienen zum Verbinden glattendiger Rohre und Ar maturen. Je nach Bauweise der Rohrkupplungen können diese für zugfeste oder nicht zugfeste Rohrverbindungen eingesetzt werden. Rohrkupplungen werden je nach Bedarf sowohl für Druckleitungen als auch für Vakuumleitungen verwendet. Zwischen den zu verbindenden Rohren wird in der Regel ein axialer Abstand eingehalten, um Längenänderungen der Rohre infolge von Temperaturänderungen o.dgl. auszugleichen oder um zu vermeiden, dass die meistens metallischen Rohre unkontrolliert aneinander stossen und/oder Schwingungen übertragen.

Bei vakuumführenden Leitungen besteht dabei die Gefahr, dass die Dichtmanschette infolge des Vakuums in den Rohrspalt eingesaugt und dabei beschädigt wird bzw. dadurch die Kupplung undicht wird. Bei Auswinkelungen, d.h. Verändern der Winkellage der mittels der Rohrkupplung verbundenen Rohre zueinander, besteht ebenfalls die Gefahr von Beschädigungen der Dichtmanschette.

Um solche Beschädigungen zu vermeiden, ist es üblich, eine Bandeinlage aus Metall oder Kunststoff zentrisch in die Manschette einzusetzen. Diese Bandeinlage stützt somit bei Vakuumangriff die Manschette und steht in Kontakt mit dem Medium (z.B. Gase oder abgesaugte Flüssigkeiten) in der Rohrleitung und kann beispielsweise bei korrosiven Medien von diesen angegriffen werden, bzw. diese u.U. ungewollt dotieren.

Eine sich lose in der Dichtmanschette befindliche Bandeinlage kann beim Transport oder bei der Handhabung der Kupplung herausfallen und dann bei der Montage der Kupplung vergessen werden. Alternativ müssen solche Bandeinlagen als Sonderzubehör geliefert werden, was einen zusätzlichen logistischen Aufwand bedeutet und ebenso vergessen werden könnte. Dies ist besonders schwerwiegend und sicherheitsrelevant, da bei einer fertig montierten Kupplung von aussen nicht erkennbar ist, ob eine Bandeinlage eingesetzt wurde.

Aus der EP 0 066 825 B1 ist eine Rohrkupplung ersichtlich, bei der einzelne harte, relativ schmale Ringe in einige Ringabschnitte der Dichtmanschette eingebettet sind. Die Ringe liegen somit in Ebenen, die sich senkrecht zur axialen Richtung der Dichtmanschette erstrecken. Dadurch sollen bestimmte Bereiche der Manschette gegen Innendruck versteift werden, wie dies beispielsweise auch bei herkömmlichen Schläuchen bekannt ist. Bei dieser Rohrkupplung handelt es sich um eine sogenannte Ablaufschelle, welche für Ablaufrohre mit geringem Innendruck (bis max. 5 bar verwendet wird. Dabei weist das Gehäuse der Rohrkupplung eine extrem dünne Wandstärke auf, wird bei der Montage aufgebogen und um die Dichtmanschette herum gelegt. Bezüglich dem Entgegenwirken des Einsaugens der Dichtmanschette in den Rohrspalt haben diese einzelnen, relativ schmalen Ringe jedoch nur eine beschränkte Wirkung, da die Bereiche der Dichtmanschette zwischen den Ringen gegen ein Einsaugen in den freien Kupplungsraum nicht geschützt sind. Diese Rohrkupplung ist daher auch nicht für die Verwendung im Vakuum vorgesehen und ihre Anwendung ist für solche Zwecke dem Fachmann auch nicht nahegelegt.

Der Erfindung liegt die Aufgabe zugrunde, eine Rohrkupplung zu schaffen deren Dichtmanschette auch bei grösseren Rohrspalten ohne den Einsatz einer zusätzlichen Bandeinlage gegen Beschädigung infolge Vakuumeinwirkung geschützt ist. Die Manschette soll somit beliebig für Innendruck und Aussendruck (Vakuum) einsetzbar sein.

Erfindungsgemäss wird dies dadurch erreicht, dass die Dichtmanschette im Innern eine sich über einen wesentlichen Teil ihrer Länge in axialer Richtung erstreckende Armierung aufweist, wobei die Armierung in radialer Richtung verformbar ist und in Axialrichtung biegesteit ist.

Durch die Armierung im Innern der Manschette kann die Anwendung einer Bandeinlage entfallen. Ausserdem kann die Wandstärke der Manschette geringer gehalten werden, was sich günstig auf die Herstellkosten auswirkt, da Gummi ein vergleichsweise teures Material ist. Weiters kann insbesondere auf bekannte Rippen oder Stege auf der Innenseite der Dichtmanschette verzichtet werden, was die Herstellformen für solche Manschetten vereinfacht.

Durch die Verformbarkeit der Armierung in radialer Richtung ist auch die Verformbarkeit der gesamten Dichtmanschette in radialer Richtung gewährleistet. Diese ist wichtig bei Rohrkupplungen mit relativ steifem Gehäuse, da bei solchen Rohrkupplungen die Dichtmanschette an einer Stelle radial nach innen eingebuchtet und somit im Aussendurchmesser verkleinert wird, wonach sie in das Gehäuse eingesetzt werden und sich darin wieder entspannen kann.

Die Armierung ist vorteilhafter als glattes oder im Querschnitt wellenförmiges Blech ausgebildet. Ein wellenförmiges Blech ist ohne grösseren Widerstand in radialer Richtung verformbar. In Längsrichtung der Dichtmanschette weist ein wellenförmiges Blech jedoch eine höhere Biegesteifigkeit auf.

Die Wandstärke des Blechs beträgt zweckmässig etwa 0.1 bis 0.5 mm.
Durch diese relativ geringe Wandstärke des Blechs ist bei genügender Biegesteifigkeit die radiale Verformbarkeit gewährleistet.

Die Wellenhöhe des gewellten Blechs beträgt vorteilhaft das 10- bis 30-fache der Wandstärke. Durch dieses Verhältnis ergibt sich eine optimale Biegesteifigkeit bei gleichzeitiger Aufrechterhaltung der radialen Verformbarkeit.

Das Blech weisst zweckmässig Perforationen auf. Solche Perforationen ergeben eine gute formschlüssige Verbindung des Blechs mit dem dieses auf beiden Seiten umgebenden gummielastischen Werkstoff.

Die Perforationen sind vorteilhafter als runde Löcher oder als in axialer Richtung verlaufende Schlitze ausgebildet. Durch die Perforationen, insbesondere in der Form von Schlitzen, wird die radiale Verformbarkeit des Blechs noch vergrössert, ohne die Steifigkeit in Axialrichtung wesentlich zu beeinflussen.

Eine weitere zweckmässige Ausführung besteht darin, dass die Armierung als Gewebe ausgebildet ist. Je nach Ausrichtung des Gewebes kann die radiale und axiale Verformbarkeit der Dichtmanschette entsprechend beeinflusst werden.

Das Gewebe besteht vorteilhaft aus Fasern, beispielsweise Glasfasern oder Cord. Glasfasern weisen eine sehr hohe Zähigkeit und Festigkeit sowie eine gute Temperaturbeständigkeit auf. Alternativ stehen jedoch auch beliebige andere geeignete Fasern oder Corde, wie sie z.B. in der Pneuindustrie gang und gäbe sind zur Verfügung. Somit sind auch Polyamidfasern, Stahlcord, Kevlar®, Kohlenstofffasern o.dgl. je nach Detaileinsatz im Rahmen der Erfindung anwendbar.

Eine zweckmässige Ausführung besteht darin, dass das Gewebe aus metallischen Drähten oder Metallcord besteht. Je nach Anforderungen können die Drähte unterschiedliche Drahtstärken und Federeigenschaften aufweisen.

Die Armierung besteht alternativ vorteilhaft aus mehreren über den Umfang verteilt angeordneten, in axialer Richtung verlaufenden Stäben. Solche Stäbe ergeben praktisch keine Beeinträchtigung der radialen Verformbarkeit der Dichtmanschette.

Die Stäbe bestehen zweckmässigerweise aus metallischem Werkstoff oder aus Kunststoff. Bei einer weiteren zweckmässigen Ausführung bestehen die Stäbe aus fasernverstärktem Kunststoff. Solche beispielsweise glasfasernverstärkte Kunststoffe weisen und ein geringes Gewicht und eine sehr hohe Festigkeit auf. Alternativ stehen beispielsweise auch Polyamid, Carbon oder Kevlar® zur Verfuegung.

Um das Einlegen der Stäbe in die Vulkanisierform zum Herstellen der Dichtmanschette zu erleichtern, sind die Stäbe vorteilhaft über quer zur Längsrichtung der Stäbe verlaufende Stege zu einem Gitter verbunden. Ein solches Gitter kann beispielsweise ab Band als Meterware produziert und für die unterschiedlichen Durchmesser der Dichtmanschette entsprechend abgelängt werden.

Der Querschnitt der Stege ist zweckmässiger weise geringer als derjenige der Stäbe. Die Stege weist somit im Unterschied zu derjenigen der Stäbe eine gute Verformbarkeit auf (Dies bedeutet somit genau das Gegenteil zu den bekannten und oben angegebenen Ring-Verstärkungen).

Die Stege können vorteilhaft aus flexiblem Draht bestehen. Die Verbindung der aus Draht bestehenden Stege mit den Stäben kann beispielsweise durch Punktschweissungen oder durch Umwickeln der Stäbe mittels dem Draht erfolgen.

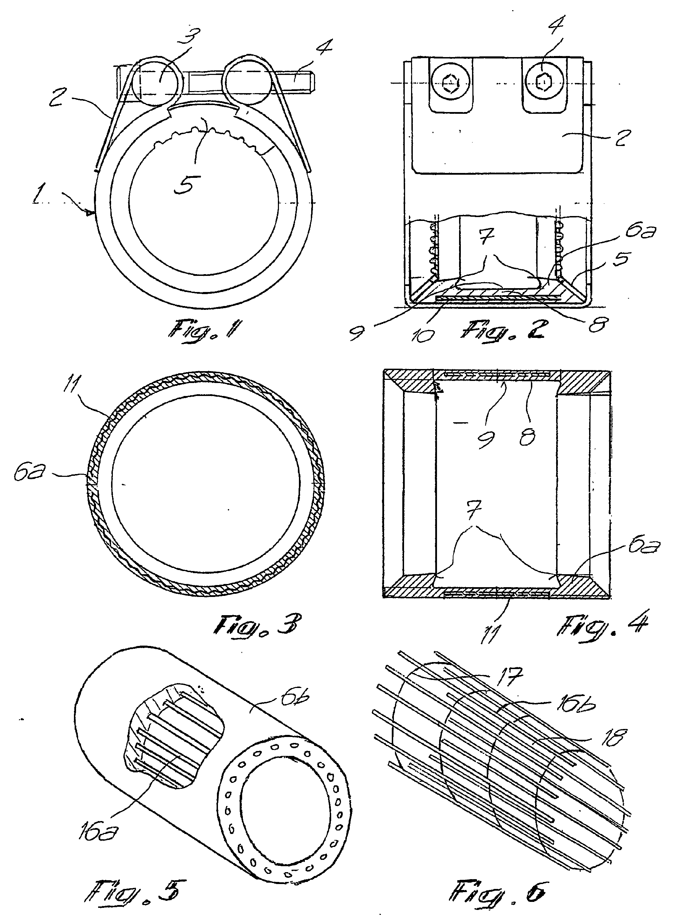

Die Bezugszeichenliste und die Fig.1 bis Fig.9 bilden, zusammen mit den in den Ansprüchen beschriebenen, beziehungsweise geschützten Gegenständen, integrierende Bestandteile der Offenbarung dieser Anmeldung. Die Figuren werden zusammenhängend und übergreifend beschrieben. Gleiche Bezugszeichen bedeuten gleiche Bauteile, Bezugszeichen mit unterschiedlichen Indizes geben funktionengleiche Bauteile an.

Die Erfindung soll nachstehend, anhand der sie beispielsweise wiedergebenden Zeichnungen näher erläutert werden. Es zeigen:
- Fig.1: Eine Rohrkupplung in unverspanntem Zustand, in Stirnansicht,
- Fig.2: eine Seitenansicht der in Fig.1 dargestellten Rohrkupplungen, teilweise im Schnitt dargestellt,
- Fig.3: einen Querschnitt durch die in Fig.2 dargestellte Dichtmanschette,
- Fig.4: einen Längsschnitt durch die Dichtmanschette gemäss Fig.3,
- Fig.5: eine weitere Ausführung einer Erfindungsgemässen, teilweise aufgeschnittenen Dichtmanschette,
- Fig.6: eine erfindungsgemässe Armierung für Dichtmanschetten,
- Fig.7: eine weitere Ausführung einer Armierung für Dichtmanschetten und
- Fig.8: eine Variante der in Fig.7 dargestellten Dichtmanschette und
- Fig.9: Eine weitere Ausführung einer erfindungsgemässen Armierung für Dichtmanschetten

Die aus Fig.1 und Fig.2 ersichtliche Rohrkupplung weist ein vorzugsweise aus metallischem Werkstoff bestehendes Gehäuse 1 mit angeformten Laschen 2 auf. In den Laschen 2 sind zylindrische Verschlussbolzen 3 angeordnet. Die Verschlussbolzen 3 werden von Spannschrauben 4 durchsetzt, welche ein Verspannen der Rohrkupplung auf den miteinander zu verbindenden Rohrenden ermöglichen.. Im Gehäuse 1 der Rohrkupplung sind Verankerungsringe 5 angeordnet, welche sich in den Ecken des Gehäuses 1 abstützen. Diese Verankerungsringe 5 ermöglichen ein zugfestes Verbinden von Rohren. Für nicht zugfeste Rohrverbindungen werden die Verankerungsringe 5 weggelassen.

Im Gehäuse 1 ist eine aus einem gummielastischen Werkstoff bestehende Dichtmanschette 6a eingesetzt. Die Dichtmanschette 6a weist gegeneinander gerichtete Dichtlippen 7 auf, welche sich beim Montieren der Rohrkupplung an die Aussenseite der zu verbindenden Rohre anlegen und somit ein Abdichten des Rohrspaltes ermöglichen. Zwischen den Dichtlippen 7 befindet sich ein relativ dünnwandiger Steg 8, welcher bei Überdruck der Rohrleitung gegen die Wandung des Gehäuses 1 gepresst wird. Der Steg 8, die Dichtlippen 7 und die Rohre bilden zusammen einen Hohlraum 9 in welchen das in den Rohrleitung geführte Medium durch den Rohrspalt in diesen Hohlraum 9 eintreten kann. Bei Vakuum führenden Rohrleitungen entsteht in diesem Hohlraum 9 ebenfalls ein Unterdruck durch den der Steg 8 radial nach innen gezogen wird. Erfindungsgemäss wird dies verhindert durch eine in den gummielastischen Werkstoff der Dichtmanschette 6a eingebettete, sich über einen wesentlichen Teil ihrer Länge in axialer Richtung erstreckende Armierung 10.

In Fig.3 und Fig.4 ist die Armierung als Wellblech 11 ausgebildet. Die Enden des Wellblechs 11 können miteinander zu einer Hülse verbunden werden oder offen bleiben. Das Wellblech 11 ermöglicht eine gute radiale Verformbarkeit der Dichtmanschette 6a. Durch den gewellten Querschnitt weist die Armierung 10 gleichzeitig in Längsrichtung eine hohe Biegesteifigkeit auf und ergibt somit eine optimale Verstärkung des Steges 8 der Dichtmanschette 6a.

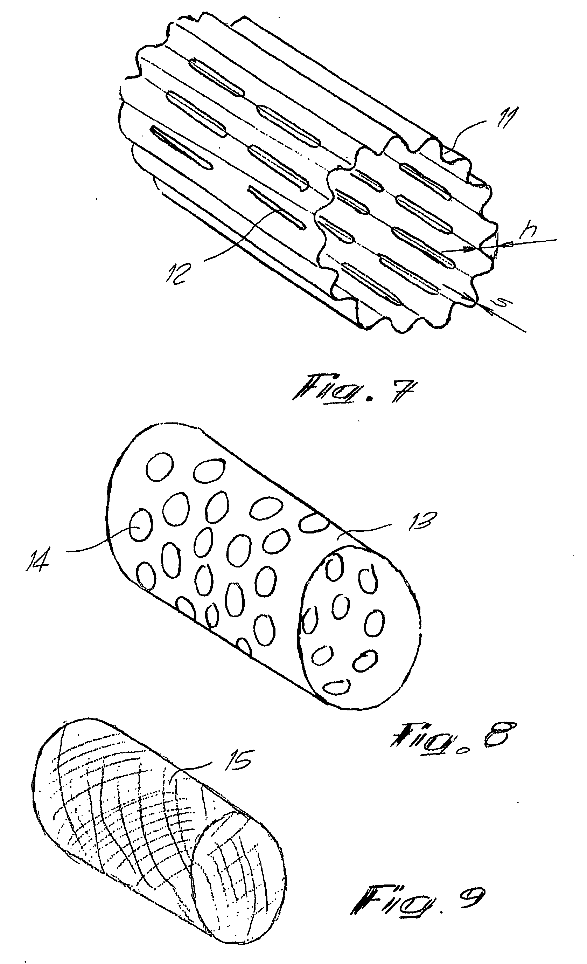

Fig.7 zeigt die aus Wellblech 11 bestehende Armierung 10 allein, ohne die sie umgebende Dichtmanschette 6a. Die Wellenhöhe h beträgt etwa das 10-bis 30-fache der Wandstärke s des Wellblechs 11. Das Wellblech 11 ist mit Längsschlitzen 12 versehen, welche eine gute formschlüssige Verbindung des gummielastischen Werkstoffes auf der Innen- und Aussenseite ergeben. Durch die Schlitze 12 wird auch die radiale Verformbarkeit des Wellblechs 11 noch verbessert.

Fig.8 zeigt eine Variante der Armierung 10 mit einer glatten Hülse 13, welche mit über ihre Länge und ihren Umfang verteilt angeordneten Löchern 14 versehen ist. Diese Löcher 14 dienen ebenfalls der besseren Verbindung der Hülse 13 mit dem sie umgebenden gummielastischen Werkstoff der Dichtmanschette 6a.

Fig.5 zeigt eine Dichtmanschette 6b mit einzelnen, in Längsrichtung ausgerichtete Stäben 16a, welche in die Dichtmanschette 6b eingebettet sind. Die Stäbe 16a ermöglichen ebenfalls eine radiale Verformung der Dichtmanschette 6b und eine hohe Biegesteifigkeit in Längsrichtung.

Aus Fig.6 sind Stäbe 16b einer Armierung mittels quer dazu verlaufenden Stegen 17 zu einem Gitter 18 verbunden. Der Querschnitt der Stege 17 ist im Verhältnis zu demjenigen der Stäbe 16 relativ gering. Dies ermöglicht ebenfalls eine gute Verformbarkeit der Dichtmanschette 6 in radialer Richtung und eine hohe Biegesteifigkeit in Längsrichtung.

Eine weitere Ausführung einer erfindungsgemässen Armierung 10 ist in Fig.9 dargestellt. Diese Armierung 10 besteht aus einem Gewebe 15, beispielsweise aus Glasfasern oder metallischen Drähten. Das Gewebe 15 kann in Umfangsrichtung ausgerichtet oder beispielsweise, wie dargestellt unter einem bestimmten Winkel zur Längsachse angeordnet werden.

Gegebenenfalls können auch Kombinationen der aus den einzelnen Figuren ersichtlichen Ausführungen gebildet werden. So ist es beispielsweise möglich, ein Gitter 18 zusätzlich durch ein Gewebe 15 zu verstärken.

### Bezugszeichenliste

- 1: Gehäuse
- 2: Lasche
- 3: Verschlussbolzen
- 4: Spannschraube
- 5: Verankerungsring
- 6a, 6b: Dichtmanschette
- 7: Dichtlippe
- 8: Steg
- 9: Hohlraum
- 10: Armierung
- 11: Wellblech
- 12: Schnitze
- 13: Hülse
- 14: Löcher
- 15: Gewebe
- 16a, 16b: Stab
- 17: Steg
- 18: Gitter

## Patentansprüche

1. Rohrkupplung mit im wesentlichen zylindrischem, vorzugsweise aus metallischem Werkstoff bestehendem Gehäuse und einer darin angeordneten, im wesentlichen hülsenförmigen Dichtmanschette aus gummielastischem Werkstoff, **dadurch gekennzeichnet, dass** die Dichtmanschette (6a, 6b) im Innern eine hülsenförmige oder stabförmige, sich über einen wesentlichen Teil ihrer Länge in axialer Richtung erstreckende Armierung (10, 11, 13, 18) aufweist, wobei die Armierung (10, 11, 13, 18) in radialer Richtung verformbar ist und in Axialrichtung biegesteif ist.

2. Rohrkupplung nach Anspruch 1, **dadurch gekennzeichnet, dass** die Armierung als glattes oder im Querschnitt wellenförmiges Blech (11, 13) ausgebildet ist.

3. Rohrkupplung nach Anspruch 2, **dadurch gekennzeichnet, dass** die Wandstärke (s) des Blechs 0,05mm bis 1,0 mm beträgt.

4. Rohrkupplung nach einem der Ansprüche 2 oder 3, **dadurch gekennzeichnet, dass** die Wellenhöhe (h) des gewellten Blechs (11) das 5 bis 30-fache der Wandstärke (s) beträgt.

5. Rohrkupplung nach einem der Ansprüche 2 bis 4, **dadurch gekennzeichnet, dass** das Blech (11, 13) Perforationen (12, 14) aufweist.

6. Rohrkupplung nach Anspruch 5, **dadurch gekennzeichnet, dass** die Perforationen als runde Löcher (14) oder als in axialer Richtung verlaufende Schlitze (12) ausgebildet sind.

7. Rohrkupplung nach einem der vorhergehenden Ansprüche , **dadurch gekennzeichnet, dass** die Armierung als Gewebe (15) ausgebildet ist.

8. Rohrkupplung nach Anspruch 7, **dadurch gekennzeichnet, dass** das Gewebe (15) aus Fasern oder Cord besteht.

9. Rohrkupplung nach Anspruch 7 oder 8, **dadurch gekennzeichnet, dass** das Gewebe (15) aus metallischen Drähten oder Metallcord besteht.

10. Rohrkupplung nach einem der vorhergehenden Ansprüche , **dadurch gekennzeichnet, dass** die Armierung aus mehreren über den Umfang verteilt angeordneten, in axialer Richtung verlaufenden Stäben (16a, 16b) besteht.

11. Rohrkupplung nach Anspruch 10, **dadurch gekennzeichnet, dass** die Stäbe (16a, 16b) aus einem metallischen Werkstoff bestehen.

12. Rohrkupplung nach Anspruch 10, **dadurch gekennzeichnet, dass** die Stäbe (16a, 16b) aus Kunststoff bestehen.

13. Rohrkupplung nach Anspruch 12, **dadurch gekennzeichnet, dass** die Stäbe (16a, 16b) aus faserverstärktem Kunststoff bestehen.

14. Rohrkupplung nach einem der Ansprüche 10 bis 13, **dadurch gekennzeichnet, dass** die Stäbe (16b) über quer zur Längsrichtung der Stäbe verlaufende Stege (17) zu einem Gitter (18) verbunden sind.

15. Rohrkupplung nach Anspruch 14, **dadurch gekennzeichnet, dass** der Querschnitt der Stege (17) wesentlich geringer ist als derjenige der Stäbe (16b).

16. Rohrkupplung nach Anspruch 14 oder 15, **dadurch gekennzeichnet, dass** die Stege (17) aus flexiblem Draht bestehen.

## Claims

1. Pipe coupling having a substantially cylindrical housing, preferably consisting of metallic material, and a substantially sleeve-like packing arranged therein and comprising elastomeric material, **characterized in that** the packing (6a, 6b) has, in the interior, a sleeve-like or rod-like reinforcement (10, 11, 13, 18) extending over a substantial part of its length in the axial direction, the reinforcement (10, 11, 13, 18) being deformable in the radial direction and rigid in the axial direction.

2. Pipe coupling according to Claim 1, **characterized in that** the reinforcement is in the form of a smooth metal sheet (11, 13) or of a metal sheet (11, 13) which is corrugated in cross-section.

3. Pipe coupling according to Claim 2, **characterized in that** the wall thickness (s) of the metal sheet is 0.05 mm to 1.0 mm.

4. Pipe coupling according to either of Claims 2 and 3, **characterized in that** the wave height (h) of the corrugated metal sheet (11) is 5 to 30 times the wall thickness (s).

5. Pipe coupling according to any of Claims 2 to 4, **characterized in that** the metal sheet (11, 13) has perforations (12, 14).

6. Pipe coupling according to Claim 5, **characterized in that** the perforations are in the form of round holes (14) or in the form of slots (12) running in the axial direction.

7. Pipe coupling according to any of the preceding Claims, **characterized in that** the reinforcement is in the form of woven fabric (15).

8. Pipe coupling according to Claim 7, **characterized in that** the woven fabric (15) consists of fibres or cord.

9. Pipe coupling according to Claim 7 or 8, **characterized in that** the woven fabric (15) consists of metallic wires or metal cord.

10. Pipe coupling according to any of the preceding Claims, **characterized in that** the reinforcement consists of a plurality of rods (16a, 16b) distributed over the circumference and running in the axial direction.

11. Pipe coupling according to Claim 10, **characterized in that** the rods (16a, 16b) consist of a metallic material.

12. Pipe coupling according to Claim 10, **characterized in that** the rods (16a, 16b) consist of plastic.

13. Pipe coupling according to Claim 12, **characterized in that** the rods (16a, 16b) consist of fibre-reinforced plastic.

14. Pipe coupling according to any of Claims 10 to 13, **characterized in that** the rods (16b) are connected via webs (17) running transversely to the longitudinal direction of the rods to form a lattice (18).

15. Pipe coupling according to Claim 14, **characterized in that** the cross-section of the webs (17) is substantially smaller than that of the rods (16b).

16. Pipe coupling according to Claim 14 or 15, **characterized in that** the webs (17) consist of flexible wire.

## Revendications

1. Raccord de tuyaux comprenant un boîtier essentiellement cylindrique, qui consiste de préférence d'un matériau métallique, et une garniture cylindrique essentiellement en forme de douille d'un matériau d'une élasticité de gomme y disposé, **caractérisé en ce, que** la garniture cylindrique (6a, 6b) comprend dans son intérieur une armature (10, 11, 13, 18), soit en forme de douille, soit en forme de barre, qui s'étend en direction axiale le long d'une partie essentielle de sa longueur, ladite armature (10, 11, 13, 18) étant déformable en direction radiale, tandis qu'elle est rigide en direction axiale.

2. Raccord de tuyaux selon la revendication 1, **caractérisé en ce, que** l'armature est formée comme tôle, soit lisse, soit ondulée en vue en coupe transversale.

3. Raccord de tuyaux selon la revendication 2, **caractérisé en ce, que** l'épaisseur de paroi (s) de la tôle se monte à 0,05mm à 1,0 mm.

4. Raccord de tuyaux selon une quelconque des revendications 2 ou 3, **caractérisé en ce, que** l'hauteur de cannelure (h) de la tôle ondulée (11) est 5 à 30 fois plus grande que l'épaisseur de paroi (s).

5. Raccord de tuyaux selon une quelconque des revendications 2 à 4, **caractérisé en ce, que** la tôle (11, 13) comprend des perforations (12, 14).

6. Raccord de tuyaux selon la revendication 5, **caractérisé en ce, que** les perforations sont formées comme des trous ronds (14) ou comme des fentes (12), qui s'entendent en direction axiale.

7. Raccord de tuyaux selon une quelconque des revendications précédentes, **caractérisé en ce, que** l'armature est formée comme tissu (15).

8. Raccord de tuyaux selon la revendication 7, **caractérisé en ce, que** le tissu (15) consiste des fibres ou de cord.

9. Raccord de tuyaux selon la revendication 7 ou 8, **caractérisé en ce, que** le tissu (15) consiste des fils métalliques ou d'un cord métallique.

10. Raccord de tuyaux selon une quelconque des revendications précédentes, **caractérisé en ce, que** l'armature consiste de plusieurs barres (16a, 16b), qui sont distribués autour de la périphérie et s'étendent en direction axiale.

11. Raccord de tuyaux selon la revendication 10, **caractérisé en ce, que** les barres (16a, 16b) consistent d'une matière métallique.

12. Raccord de tuyaux selon la revendication 10, **caractérisé en ce, que** les barres (16a, 16b) consistent d'une matière artificielle.

13. Raccord de tuyaux selon la revendication 12, **caractérisé en ce, que** les barres (16a, 16b) consistent d'une matière artificielle renforcée par fibres.

14. Raccord de tuyaux selon une quelconque des revendications 10 à 13, **caractérisé en ce, que** les barres (16b) sont reliés à former une grille (18) par des entretoises (17), qui s'étendent transversalement aux barres.

15. Raccord de tuyaux selon la revendication 14, **caractérisé en ce, que** la section transversale des entretoises (17) est substantiellement plus petite que celle des barres (16b) .

16. Raccord de tuyaux selon la revendication 14 ou 15, **caractérisé en ce, que** les entretoises (17) consistent d'un fil métallique flexible.
